# EUROPEAN PATENT APPLICATION

(11) **EP 2 518 715 A1**
(43) Date of publication of application: **31.10.2012**
(21) Application number: 10838540.2
(22) Date of filing: 11.05.2010
(51) Int. Cl.: G09G 3/36, H05B 37/02

(54) **DISPLAY CONTROL METHOD AND DEVICE FOR LIQUID CRYSTAL DISPLAY SCREEN**

(30) Priority: 24.12.2009 CN 200910259791
(71) Applicant: ZTE Corporation, Shenzhen, Guangdong 518057 (CN)
(72) Inventor: WANG, Ligang, Guangdong 518057 (CN)
(74) Representative: Office Freylinger
(86) International application number: PCT/CN2010/072637
(87) International publication number: WO 2011/075974

(57) **Abstract**

A method and apparatus for controlling the display of a liquid crystal display are provided. The method comprises: receiving an image to be displayed (101); acquiring a COM clock to be used as a sampling signal to refresh a liquid crystal display (102); synchronizing a control clock of a backlight of the liquid crystal display according to the sampling signal so as to control the duty ratio of the backlight of the liquid crystal display to enable the liquid crystal display to display the image (103). By way of the present invention, the display effects of the mobile phone LCD outside screen are improved, and user experience is improved as well.

## Description

### Field of the Invention

The present invention relates to the electronic field and, in particular, to a method and apparatus for controlling the display of a liquid crystal display.

### Background of the Invention

Considering the cost, monochrome liquid crystal display (abbreviated as LCD) screen is generally used as the outside screen of the mobile phones, i.e. displaying tedious black and white patterns. With the appearance of the mobile phones being more and more fashionable, if the mobile phones have a colorful outside screen, it is undoubted that it will become a light spot and can attract more users.

The inventors have found by the research on LCD display principles that the color of monochrome LCD display pattern depends on the color of the backlight and that the color of the display pattern can be changed just by changing the backlight color. In the related art, the white light in the LCD white backlight is formed by illuminating the LED modules of three primary colors (RGB) of the colored light simultaneously, that is, the backlight color can be controlled just by controlling the illumination of the RGB lights respectively. However, if there is only such change, it is a little rigid, which affects user experience.

### Summary of the Invention

The embodiments of the present invention provide a solution for controlling the display of a liquid crystal display so as to solve the above problem.

In order to achieve the above object, a method for controlling the display of a liquid crystal display is provided according to one aspect of the present invention.

The method for controlling the display of a liquid crystal display according to the present invention comprises: receiving an image to be displayed; acquiring a COM clock to be used as a sampling signal to refresh a liquid crystal display; synchronizing a control clock of a backlight of the liquid crystal display according to the sampling signal so as to control a duty ratio of the backlight of the liquid crystal display to enable the liquid crystal display to display the image.

Furthermore, controlling the duty ratio of the backlight of the liquid crystal display comprises: synchronously controlling the duty ratios of a red backlight, a green backlight, and a blue backlight of the liquid crystal display to complete the refresh of all the COM clocks successively to enable the image to present a color gradual change effect.

Furthermore, controlling the duty ratio of the backlight of the liquid crystal display further comprises: repeatedly controlling, when the refresh of all the COM clocks are completed, the duty ratios of the red backlight, green backlight, and blue backlight so as to enable the image displayed by the liquid crystal display to present a static color gradual change effect.

Furthermore, controlling the duty ratio of the backlight of the liquid crystal display comprises: synchronously controlling the duty ratios of a red backlight, a green backlight, and a blue backlight of the liquid crystal display to complete the refresh of all the COM clocks successively to refresh one frame of dynamic color gradual change image.

Furthermore, controlling the duty ratio of the backlight of the liquid crystal display further comprises: synchronously controlling, after the refresh of all the COM clocks are completed, the duty ratios of the red backlight, green backlight or blue backlight, and modifying the initial values of the duty ratios of the red backlight, green backlight and blue backlight; and with the initial values as starting points, completing the refresh of the backlights of all the COM clocks successively, and reciprocally controlling the duty ratios of the red backlight, green backlight and blue backlight successively to achieve the display effect of a dynamic color gradual change image.

In order to achieve the above object, an apparatus for controlling the display of a liquid crystal display is also provided according to another aspect of the present invention.

The apparatus for controlling the display of a liquid crystal display according to the present invention comprises: a receiving module adapted to receive an image to be displayed; an acquisition module adapted to acquire a COM clock to be used as a sampling signal to refresh the liquid crystal display; a control display module adapted to synchronize a control clock of a backlight of the liquid crystal display according to the sampling signal so as to control to duty ratio of the backlight of the liquid crystal display to enable the liquid crystal display to display the image.

Furthermore, the control display module is adapted to synchronously control the duty ratios of a red backlight, a green backlight, and a blue backlight of the liquid crystal display to complete successively the refresh of all the COM clocks to enable the image to present a color gradual change effect.

Furthermore, the control display module is further adapted to repeatedly control, when the refresh of all the COM clocks are completed, the duty ratios of the red backlight, green backlight, and blue backlight so as to enable the image displayed by the liquid crystal display to present a static color gradual change effect.

Furthermore, the control display module is in particular adapted to synchronously control the duty ratios of a red backlight, a green backlight, and a blue backlight of the liquid crystal display to complete the refresh of all the COM clocks successively to refresh one frame of dynamic color gradual change image.

Furthermore, the control display module is further adapted to synchronously control, after the refresh of all the COM clocks are completed, the duty ratios of the red backlight, green backlight or blue backlight, and modify the initial values of the duty ratios of the red backlight, green backlight and blue backlight; and with the initial values as starting points, complete the refresh of the backlights of all the COM clocks successively, and reciprocally control the duty ratios of the red backlight, green backlight and blue backlight successively to achieve the display effect of a dynamic color gradual change image.

By way of the present invention, the problem in the related art that user experience is affected due to the color monotony of the outside LCD screen display of mobile phone is solved by: receiving an image to be displayed; acquiring a COM clock to be used as a sampling signal to refresh a liquid crystal display; and controlling the duty ratio of the red backlight, green backlight, and blue backlight according to the sampling signal so as to enable the image displayed by the liquid crystal display to present a color gradual change effect. The display effect of mobile phone LCD outside screen color gradual change is achieved, improving user experience.

### Brief Description of the Drawings

Fig. 1 is a flow chart of a method for controlling the display of a liquid crystal display according to the embodiment of the present invention;
Fig. 2 is a flow chart of a method for controlling the display of a liquid crystal display according to the preferred embodiment of the present invention;
Fig. 3 is a schematic diagram of monochrome LCD display effect according to the embodiment of the present invention;
Fig. 4 is a schematic diagram of displaying an effect of static color gradual change logo image according to the embodiment of the present invention;
Fig. 5 is a schematic diagram of the principles of displaying an effect of dynamic color gradual change logo image according to the embodiment of the present invention; and
Fig. 6 is a block diagram of the structure of an apparatus for controlling the display of a liquid crystal display according to the embodiment of the present invention.

### Detailed Description of the Embodiments

The core concept of the embodiments of the present invention is that: the image displayed by the liquid crystal display is enabled to present the image to increase the display effect of mobile phone LCD outside screen and improve user experience by receiving the image to be displayed, acquiring a COM clock to be used as a sampling signal to refresh a liquid crystal display; and controlling the duty ratio of the red backlight, green backlight, and blue backlight according to the sampling signal.

The technical solution of the present invention will be described in detail in conjunction with drawings and preferred embodiments hereinafter.

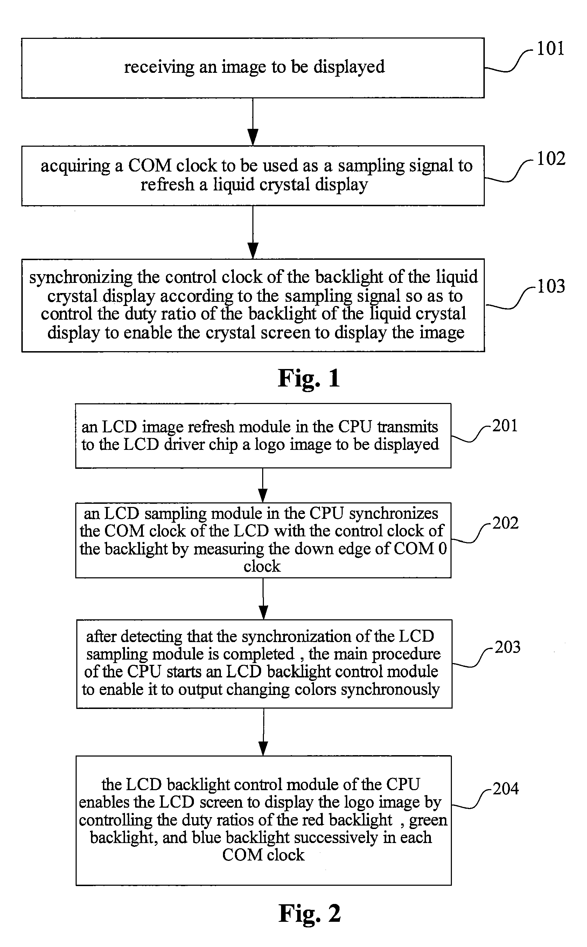

Fig. 1 shows a method for controlling the display of a liquid crystal display according to the embodiment of the present invention, and as shown in Fig. 1, it comprises the steps of:
101: receiving an image to be displayed;
102: acquiring a COM clock to be used as a sampling signal to refresh a liquid crystal display; and
103: synchronizing a control clock of a backlight of the liquid crystal display according to the sampling signal so as to control a duty ratio of the backlight of the liquid crystal display to enable the liquid crystal display to display the image.

By way of the above embodiment of the present invention, the problem in the related art that user experience is affected due to the color monotony of the mobile phone LCD outside screen display pattern is solved. And, the display effect of mobile phone LCD outside screen color gradual change is achieved, improving user experience.

Furthermore, controlling the duty ratio of the backlight of the liquid crystal display comprises: synchronously controlling the duty ratio of a red backlight, a green backlight, and a blue backlight of the liquid crystal display to complete the refresh of all the COM clocks successively to enable the image to present a color gradual change effect.

Furthermore, controlling the duty ratio of the backlight of the liquid crystal display also comprises: when the refresh of all the COM clocks are completed, repeatedly controlling the duty ratio of the red backlight, green backlight, and blue backlight so as to enable the image displayed by the liquid crystal display to present a static color gradual change effect.

Furthermore, the duty ratios of the red backlight, green backlight, and blue backlight of the liquid crystal display are synchronously controlled to complete the refresh of all the COM clocks successively, so as to refresh a frame of dynamic color gradual change image.

Furthermore, controlling the duty ratio of the backlight of the liquid crystal display also comprises: after the refresh of all the COM clocks are completed, synchronously controlling the duty ratio of the red backlight, green backlight or blue backlight, and modifying the initial values of the duty ratios of the red backlight, green backlight and blue backlight; and completing, with the initial values as starting points, the refresh of the backlights of all the COM clocks successively, and repeatedly controlling the duty ratios of the red backlight, green backlight and blue backlight successively and reciprocally to form the display effect of a dynamic color gradual change image.

The embodiments of the present invention will be described in detail with a mobile phone monochrome LCD outside screen display logo image as an example hereinafter. However, this example does not constitute limitation on the protection scope of the embodiments of the present invention.

### Embodiment I

In the example of displaying a static color gradual change logo image, Fig. 2 is flow chart of a method for controlling the display of a liquid crystal display according to the preferred embodiment of the present invention, and as shown in Fig. 2, it comprises the following steps.
201: an LCD image refresh module in the CPU transmits to the LCD driver chip a logo image to be displayed.
202: an LCD sampling module of the CPU synchronizes the COM clock of the LCD with the control clock of the backlight by measuring the down edge of a COM0 clock.
203: after detecting that the synchronization of the LCD sampling module is completed, the main procedure of the CPU starts an LCD backlight control module to enable it to output changing colors synchronously.
204: the LCD backlight control module of the CPU enables the LCD screen to display the logo image by controlling the duty ratios of red LED, green LED, and blue LED successively in each COM clock to present static color gradual change effect.

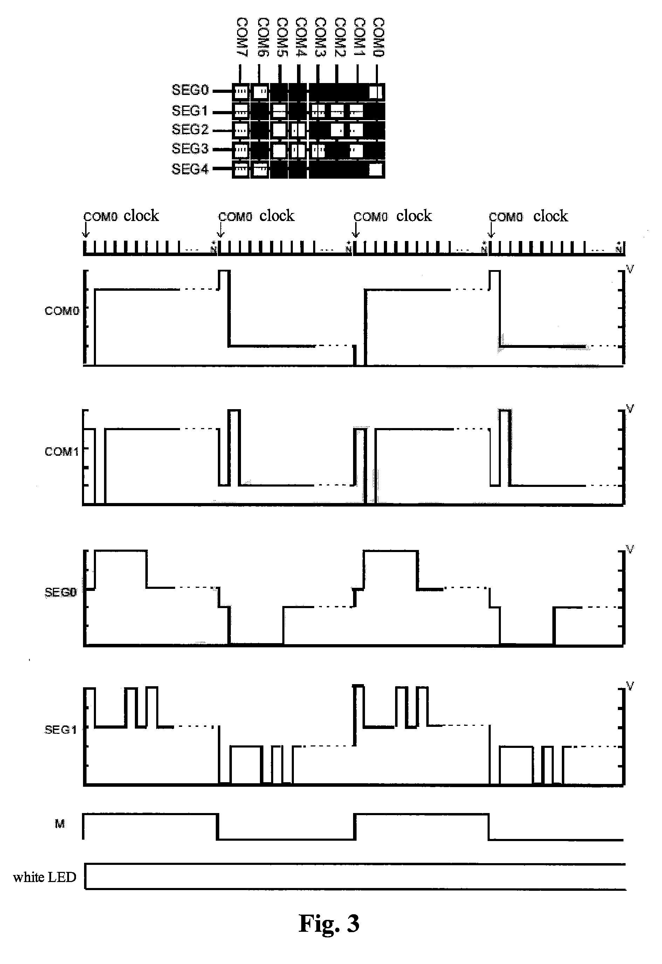

Fig. 3 is a schematic diagram of the display effect of a monochrome LCD according to the embodiment of the present invention. And as shown in Fig. 3, the LCD screen controls the photopermeability of the liquid crystal grating by the phase difference and voltage difference of the COM signal (COMMON signal) and SEGMENT signal (SEG signal) loaded at both sides of the liquid crystal grating. One COM period is defined between two adjacent pulses of the COM clock. There is only one COM signal being high level (or low level) during the same COM period and the levels of other COM signals are opposite thereto. This moment is just the valid phase period of this COM signal. And in a line controlled by this COM signal, only SEGMENT signals that need to be displayed output a level that is opposite to the level of this COM signal. This voltage difference causes the LCD grating, which needs to be displayed, to allow light to transmit and other gratings to be opaque. In a next pulse, it comes to the valid phase period of the next COM signal, and the voltage difference between the next COM signal and the SEGMENT signal controls a corresponding line of LCD grating to allow light to transmit.

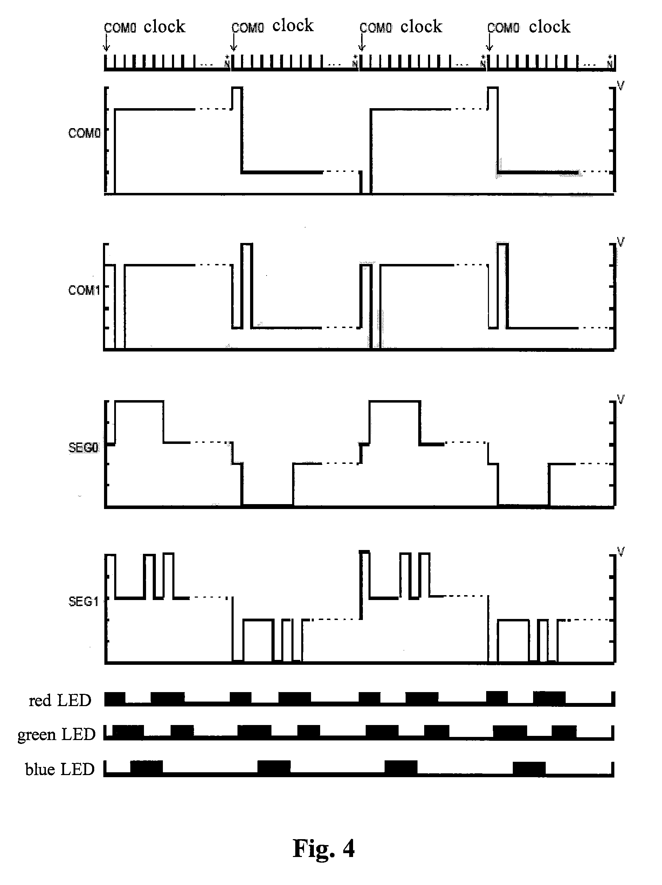

It can be known from the above principles that at the same moment only the LCD grating which is controlled by one COM signal will allow light to transmit, and the color change of the backlight is controlled by synchronizing the COM signal, thus achieving the effect of display pattern color gradual change. In particular, Fig. 4 is a schematic diagram of displaying an effect of static color gradual change logo image according to the embodiment of the present invention. And as shown in Fig. 4, in the COM0 clock, the LCD backlight control module controls the red LED of the backlight to output a square wave of the duty ratio of 16/16, the green LED to output one of 0/16, and the blue LED to output one of 0/16, i.e. the dots which need to be displayed in the first line of LCD controlled by the COM0 clock are red.

In the COM1 clock, the LCD backlight control module controls the red backlight (red LED) to output a square wave of the duty ratio of 15/16, the green backlight (green LED) to output one of 1/16, the blue backlight (blue LED) to output one of 0/16, i.e. the dots which need to be displayed in the first line of LCD controlled by the COM0 clock are the next gradual change color.

Those skilled in the art can understand that the LCD backlight control module will enable the image displayed by the LCD to present the color gradual change effect by controlling the duty ratios of red LED, green LED, and blue LED successively in each COM clock.

When the refresh of all the COM clocks is completed, the LCD backlight control module repeatedly controls the backlights, so that it forms a stable static color gradual change logo image display effect.

### Embodiment II

In the example of displaying a static color gradual change logo image, it is assumed that the logo image dynamic gradual change has 16 frames and for each SEGMENT clock progresses for one time. The particular method comprises the following steps.
401: an LCD image refresh module in the CPU transmits to the LCD driver chip a logo image to be displayed.
402: an LCD sampling module of the CPU synchronizes the COM clock of the LCD with the control clock of the backlight by measuring the down edge of the COM0 clock.
403: after detecting that the synchronization of the LCD sampling module is completed, the main procedure of the CPU starts an LCD backlight control module to enable it to output changing colors synchronously.
404:the LCD backlight control module enables the image displayed by the LCD screen to have the dynamic color gradual change effect by controlling the duty ratios of red/green/blue LED in each COM clock.

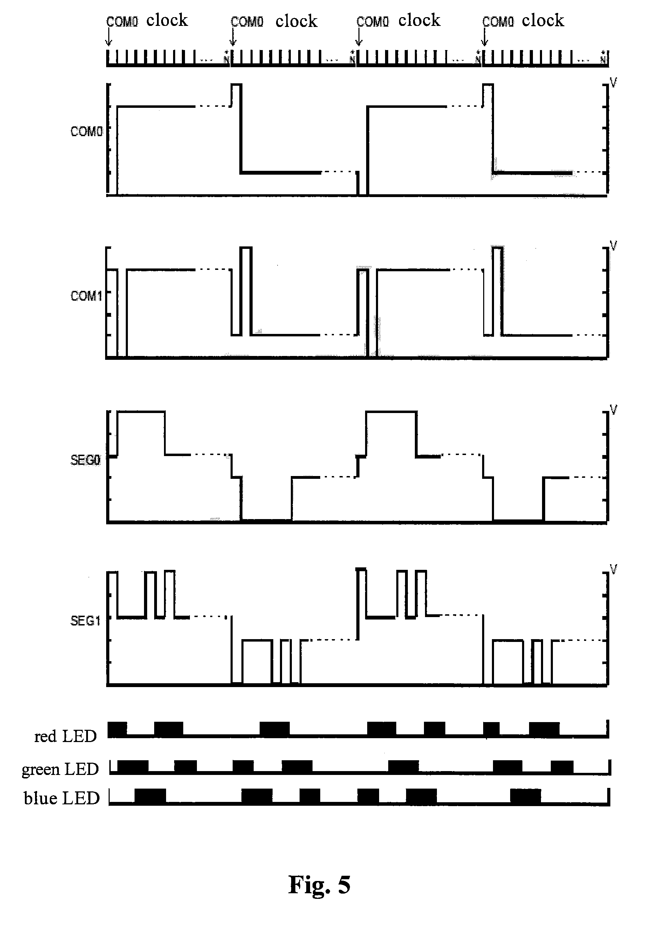

Fig. 5 is a principle schematic diagram of displaying an effect of dynamic color gradual change logo image according to the embodiment of the present invention. And as shown in Fig. 5, the LCD backlight control module controls the red LED to output a square wave of the duty ratio of 16/16, the green LED to output one of 0/16, and the blue LED to output one of 0/16 in the COM0 clock, i.e. the dots which need to be displayed in the first line of LCD controlled by the COM0 clock are red.

In the COM1 clock, the LCD backlight control module controls the red LED of the backlight to output a square wave of the duty ratio of 15/16, the green LED to output one of 1/16, the blue LED to output one of 0/16, i.e. the dots which need to be displayed in the first line of LCD controlled by the COM0 clock are the next gradual change color.

Those skilled in the art can understand that the LCD backlight control module will enable the image displayed by the LCD to have the color gradual change effect by controlling the duty ratios of red LED, green LED, and blue LED successively in each COM clock. When the refresh of all the COM clocks are completed, i.e. the refresh of one frame of dynamic color gradual change logo image is completed, then the backlight is re-controlled, but the initial value of the backlight is changed to be: the red LED outputs a square wave of the duty ratio of 0/16, the green LED outputs one of 16/16, and the blue LED outputs one of 0/16. Then this initial value is used as the starting point to complete the refresh of the backlights of all the COM clocks successively. The LCD backlight control module reciprocally controls the color change of the backlight successively, so that a dynamic color gradual change logo image display effect is achieved.

In this case, the change of the initial value in COM0 clock is as follows:

| red | green | blue |
|---|---|---|
| 16/16 | 0/16 | 0/16 |
| 0/16 | 16/16 | 0/16 |
| 16/16 | 16/16 | 0/16 |
| 0/16 | 0/16 | 16/16 |
| oo | oo | oo |
| 0/16 | 0/16 | 0/16 |

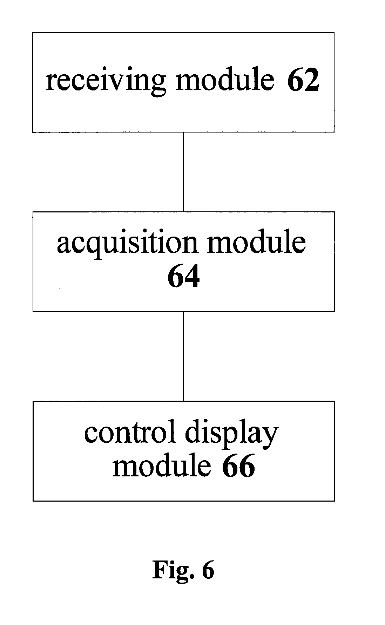

Fig. 6 shows an apparatus for controlling the display of a liquid crystal display according to the embodiment of the present invention, and as shown in Fig. 6, this apparatus comprises: a receiving module 62, an acquisition module 64 and a control display module 66, which structure will be described in detail hereinafter.

The receiving module 62 is adapted to receive an image to be displayed; the acquisition module 64 coupled to the receiving module 62 is adapted to acquire a COM clock to be used as a sampling signal to refresh a liquid crystal display; and the control display module 66, being coupled to the acquisition module 64, is adapted to synchronize the control clock of the backlight of the liquid crystal display according to this sampling signal so as to control the duty ratio of the backlight of the liquid crystal display to enable this liquid crystal screen to display this image.

Furthermore, the control display module 66 is adapted to synchronously control the duty ratios of a red backlight, a green backlight, and a blue backlight of the liquid crystal display to complete the refresh of all the COM clocks successively to enable the image to present a color gradual change effect.

Furthermore, the control display module 66 is also adapted to repeatedly control, when the refresh of all the COM clocks are finished, the duty ratios of the red backlight, green backlight, and blue backlight so as to enable the image displayed by this liquid crystal display to present a static color gradual change effect.

Furthermore, the control display module 66 is adapted to synchronously control the duty ratios of a red backlight, a green backlight, and a blue backlight of the liquid crystal display to complete the refresh of all the COM clocks successively to refresh one frame of dynamic color gradual change image.

Furthermore, the control display module 66 is also adapted to synchronously control, after the refresh of all the COM clocks are finished, the duty ratios of the red backlight, green backlight or blue backlight, and modify the initial values of the duty ratios of the red backlight, green backlight and blue backlight; and using the initial values as starting points, complete the refresh of the backlights of all the COM clocks successively, and reciprocally control the duty ratios of the red backlight, green backlight and blue backlight successively to achieve the display effect of dynamic color gradual change image.

In summary, in the embodiments of the present invention, by way of the delicate combination of the principle of LCD displaying line by line and LCD backlight RGB color change, the problem in the related art that user experience is affected due to the color monotony of the mobile phone LCD outside screen display pattern is solved. The display effect of color gradual change is achieved. And, the implementation of this method is simple, which makes the display effect of monochrome LCD outside screen to have significant improvement in quality without increasing costs and changing the structure. At the same time, the mobile phone is made to be more fashionable and be able to seize the attention of the customers, thus the experience quality of the users is improved.

The above description shows and describes preferred embodiments of the present invention, however, as described previously, it should be understood that the present invention is not limited to the form disclosed by the present document and it should not be viewed as excluding other embodiments. It can be applied in various other combinations, modifications and circumstances and can be modified by way of the above teaching or the technology or knowledge in relevant field within the invention concept scope described by the present document. The modifications and changes made by those skilled in the art should fall into the protection scope of the appended claims of the present invention without departing from the spirit and scope of the present invention.

## Claims

1. A method for controlling the display of a liquid crystal display, **characterized by** comprising:
receiving an image to be displayed;
acquiring a COM clock to be used as a sampling signal to refresh a liquid crystal display; and
synchronizing a control clock of a backlight of the liquid crystal display according to the sampling signal so as to control the duty ratio of the backlight of the liquid crystal display to enable the liquid crystal display to display the image.

2. The method of claim 1, **characterized in that** controlling the duty ratio of the backlight of the liquid crystal display comprises:
synchronously controlling the duty ratios of a red backlight, a green backlight, and a blue backlight of the liquid crystal display to complete the refresh of all the COM clocks successively to enable the image to present a color gradual change effect.

3. The method of claim 2, **characterized in that** controlling the duty ratio of the backlight of the liquid crystal display further comprises:
repeatedly controlling, when the refresh of all the COM clocks are completed, the duty ratios of the red backlight, green backlight, and blue backlight so as to enable the image displayed by the liquid crystal display to present a static color gradual change effect.

4. The method of claim 1, **characterized in that** controlling the duty ratio of the backlight of the liquid crystal display comprises: synchronously controlling the duty ratios of the red backlight, green backlight and blue backlight of the liquid crystal display to complete the refresh of all the COM clocks successively and complete the refresh of one frame of dynamic color gradual change image.

5. The method of claim 4, **characterized in that** controlling the duty ratio of the backlight of the liquid crystal display further comprises:
synchronously controlling, after the refresh of all the COM clocks are completed, the duty ratios of the red backlight, green backlight or blue backlight, and modifying the initial values of the duty ratios of the red backlight, green backlight and blue backlight; and with the initial values as starting points, completing the refresh of the backlights of all the COM clocks successively, and reciprocally controlling the duty ratios of the red backlight, green backlight and blue backlight successively to achieve the display effect of a dynamic color gradual change image.

6. An apparatus for controlling the display of a liquid crystal display, **characterized in that** it comprises:
a receiving module adapted to receive an image to be displayed;
an acquisition module adapted to acquire a COM clock to be used as a sampling signal to refresh a liquid crystal display; and
a control display module adapted to synchronize a control clock of a backlight of the liquid crystal display according to the sampling signal so as to control the duty ratio of the backlight of the liquid crystal display to enable the liquid crystal display to display the image.

7. The apparatus of claim 6, **characterized in that** the control display module is adapted to synchronously control the duty ratios of a red backlight, a green backlight, and a blue backlight of the liquid crystal display and complete successively the refresh of all the COM clocks to enable the image to present a color gradual change effect.

8. The apparatus of claim 7, **characterized in that** the control display module is further adapted to repeatedly control, when the refresh of all the COM clocks are completed, the duty ratios of the red backlight, green backlight, and blue backlight so as to enable the image displayed by the liquid crystal display to present a static color gradual change effect.

9. The apparatus of claim 6, **characterized in that** the control display module is adapted to synchronously control the duty ratios of a red backlight, a green backlight, and a blue backlight of the liquid crystal display and complete the refresh of all the COM clocks successively to complete the refresh of one frame of dynamic color gradual change image.

10. The apparatus of claim 9, **characterized in that** the control display module is further adapted to synchronously control, after the refresh of all the COM clocks are completed, the duty ratios of the red backlight, green backlight or blue backlight, and modify the initial values of the duty ratios of the red backlight, green backlight and blue backlight; and with the initial values as starting points, complete the refresh of the backlights of all the COM clocks successively, and reciprocally control the duty ratios of the red backlight, green backlight and blue backlight successively to achieve the display effect of a dynamic color gradual change image.
